# EUROPEAN PATENT APPLICATION

(11) **EP 1 903 821 A2**
(43) Date of publication of application: **26.03.2008**
(21) Application number: 07018638.2
(22) Date of filing: 21.09.2007
(51) Int. Cl.: H04Q 7/38

(54) **Method for handling radio link failure in wireless communications system and related apparatus**

(30) Priority: 21.09.2006 US 846102 P
(71) Applicant: Innovative Sonic Limited, Tortola (VG)
(72) Inventor: Jen, Yu-Chih, Peitou, Taipei City Taiwan (TW)
(74) Representative: Schaeberle, Steffen

(57) **Abstract**

After radio link failure is detected, a wireless communications system handles the radio link failure efficiently by utilizing at least two first timers in a first entity or at least two second timers in a second entity to perform radio link recovery or re-establishment to determine when to enter an idle mode or when to release radio resource (302).

## Description

This application claims the benefit of U.S. Provisional Application No. 60/846,102, filed on September 21,2006 and entitled "Method and Apparatus for Handling Radio Link Failure in Wireless Communications System," the contents of which are incorporated herein by reference.

The present invention relates to a method of handling radio link failure in wireless communications systems and related devices according to the pre-characterizing clauses of claims 1 and 14.

In a wireless communications system, radio link failure (RLF) between user equipment (UE) and UTRAN can occur due to all kinds of impairments in a wireless environment, unfavorable signal propagation conditions, or even system malfunctions. For some applications, upon RLF, a user may notice immediately if there is unexpected delay or discontinuity in the radio bearer over which the service is provided. Mechanisms, including a cell update procedure, used to detect and/or handle the failures require parameters and timers to trigger each step of a normal procedure, or to make decisions for linking to other procedures. With the mechanism, re-establishments of lost radio connections will be managed, so that the incident is likely to be unnoticed by the user, or at least can be recovered from as soon as possible.

In 3GPP TS 25.331 V6.10, "Radio Resource Control (RRC); Protocol specification", the timers and parameters in the UE, e.g. T313, T314/T315, N302, N315, N313, T302, or T307, are obtained from a system information block, and some are used with counters, e.g. V302, for handling related circumstances, respectively. For example, T314 and T315, acting as re-establishment timers when re-establishments of lost connections are still allowed, are simply used to determine when to go to IDLE mode after reconnection attempts from the decisions of cell update and reselection, where T314 and T315 are typically used in circuit switching and packet switching domain, respectively. T314 and T315 values used in NBs are configured by RNC and are usually larger than those used in UEs. In contrast, in the case of 3GPP LTE, it is assumed that only the packet switching domain will be utilized, and it is expected that there will be more applications for mobile devices. The provision of similar mechanisms for RLF in LTE remains to be well defined.

Forward handover is used in UMTS to recover the loss of a radio link, or a failed reconfiguration procedure. A UE can initiate a cell update procedure with the target Node B when a regular handover fails and when the UE is not able to go back to the source Node B. In LTE, efficient performance of forward handover is expected and a related forwarding feature can be further exploited to enhance the radio link connection and service continuity.

In UMTS, there is a timer in a domain used to decide when to enter the IDLE mode upon the detection of RLF. 3GPP TSG-RAN2 LTE Meeting #bis53, "Radio Link failure handling in LTE" (R2-061827) gives a short summary of UMTS RLF handling. Based on the assumption that an RLF in LTE_ACTIVE (RRC_CONNECTED) state is most comparable with an RLF in CELL_DCH in UMTS, it is suggested that only one timer (T315 for PS domain) will be needed to decide when to enter LTE_IDLE (RRC_IDLE), since there will be only one domain in LTE.

In the prior art, it remains unclear how many timers are used to determine when to go to IDLE and how each timer value is configured in LTE. It is understood that there will be only one domain (PS) in LTE. However, one domain does not mean that just one timer is needed. For, when two timers, working independently, were introduced in UMTS for two domains, the characteristics of provided application services, e.g. real time or non-real time, were also considered to set the configuration values. In LTE, employed services and new applications will have various QoS requirements and different sensitivities to the endurable duration of radio link failure, e.g. out of synchronization.

In addition, based on the consideration of potential UE capability, e.g. dual receiver or multiple receiver, it is possible that the UE will maintain more than one radio link in different frequency layers or monitor different frequency bands, where different services and applications may applied, Therefore, it is possible that radio link failure will happen in one frequency layer, and the other frequency layer (or other frequency layers in case of multiple receiver) will maintain good radio link condition. Similarly, it is also possible that one service-providing entity will encounter a malfunction, but the other will provide stable services. Even with one receiver, different services may require different timers. Therefore, there is no reason to maintain only one timer that may limit the efficiency of UE capability and be unfair to different service requirements.

On the other hand, the values of timers are configured in the RNC in UMTS. However, LTE removes the RNC, so that it is unclear which entity should decide the configuration values of the timers. It is known that characteristics of SAE bearer services will be decided at the gateway level (aGW). In addition, a functional entity at the gateway level also knows about network configuration and signaling and user plan load. Yet, the functional entity at the NodeB level (eNB) might respond and reflect the transmission status more quickly.

Further, in UMTS, T313 (based on N313) and N313 (maximum number of successive out of sync indications received from L1) are used to detect the radio link failure. In addition, T302, N302 and V302 are used for a cell update/URA update procedure, where V302 is a counter/variable instead of a timer/parameter. It is set by UE instead of being received from SIB.

Similar to the problem of the prior art mentioned above, it remains unclear how many timers and parameters are used to detect or handle the radio link failure, and how those values are configured in LTE. In addition, there might be several mobility and QoS levels for one single application. For example, from the same gaming/MBMS service provider (server), a provided gaming application running on a UE could be real time or non-real time with mobility levels of none, low, medium or high. Consequently, an application might require a cell update procedure-(or a random access procedure in LTE performs the similar functions) more frequent sometimes, but not require the cell update procedure (or same-functional procedure) as frequently at other times. On the other hand, for some applications, the time of detection of radio link failure might be more critical than others.

Thus, it seems desirable that the timers and parameters in UE and eNB in LTE be updateable or reconfigurable, without the need for bearer re-establishment. This is based on the assumption that values of timer(s) and parameter(s) for RLF recovery by initiating the cell update procedure or same-functional procedure (e.g. random access procedure) are received during SAE bearer establishment.

For all of the above discussion, mapping from LTE_IDLE to RRC_IDLE and from LTE_ACTIVE to RRC_CONNECTED are assumed.
Cell update procedure in LTE in the context only represents a procedure performing re-establishment or location update in functional and conceptual point of view.

This in mind, the present invention aims at providing a method and apparatus for handling radio link failure in a packet switching domain of a wireless communications system, so as to use at least two timers for handling radio link failure in a wireless communications system.

This is achieved by a method and apparatus for handling radio link failure in a packet switching domain of a wireless communications system according to the pre-characterizing clauses of claims 1 and 14. The dependent claims pertain to corresponding further developments and improvements.

As will be seen more clearly from the detailed description following below, a method of handling radio link failure in a packet switching domain of a wireless communications system after detecting the radio link failure comprises utilizing at least two first timers in a first entity or at least two second timers in a second entity for radio link recovery or re-establishment to determine when to enter an idle mode or when to release a radio resource.

In the following, the invention is further illustrated by way of example, taking reference to the accompanying drawings. Thereof
Fig. 1 is a functional block diagram of a communications device.
Fig. 2 is a diagram of the program code shown in Fig. 1.
Fig. 3 is a flowchart of handling radio link failure according to a preferred embodiment of the present invention.

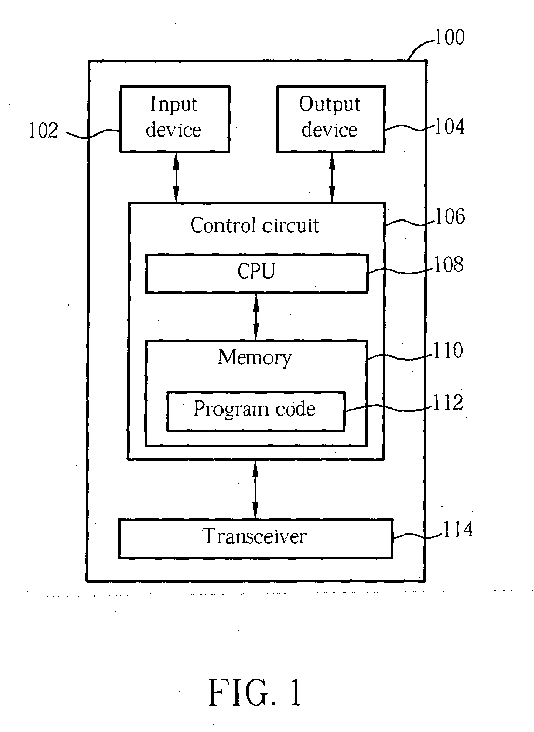

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100.

In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3 or even higher layers. Preferably, the communications device 100 is utilized in an LTE/SAE mobile communications system.

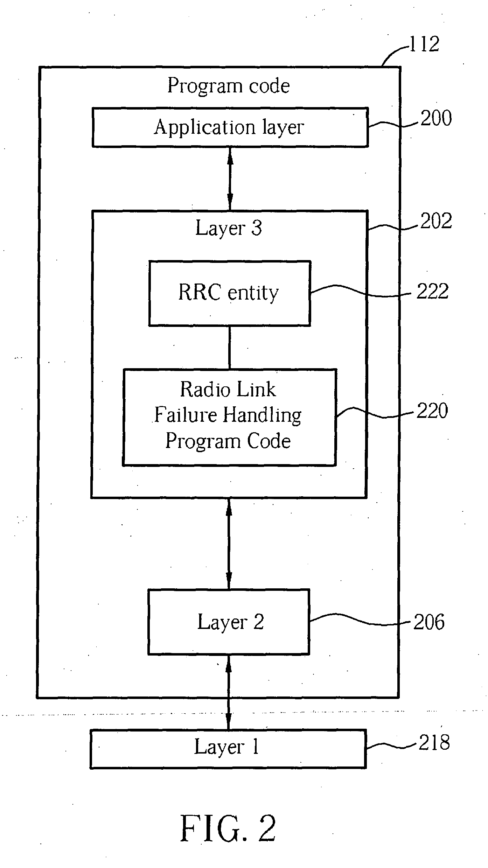

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 3 202 includes a radio resource control (RRC) entity 222, which is used for controlling the Layer 1 218 and the Layer 2 206 and performing peer-to-peer RRC communication with other communications devices, such as a base station or a Node-B-like entity. In addition, the RRC entity 222 can change an RRC state of the communications device 100, switching between an idle mode, a detached state, and an active state. The program code 112 further comprises a radio link failure handling program code 220, which is used for handling radio link failure.

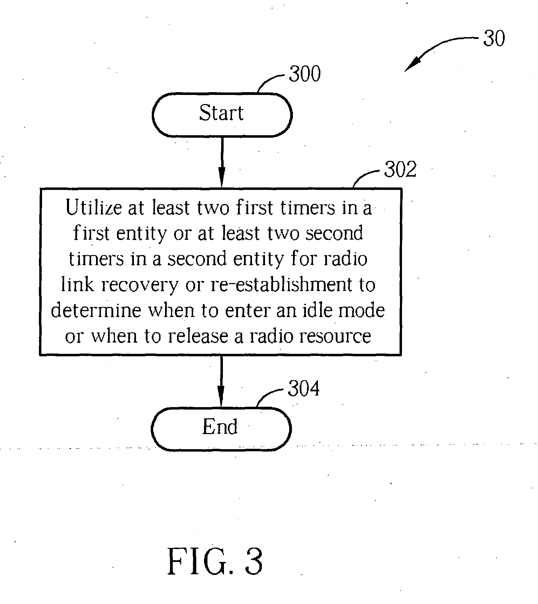

Please refer to Fig. 3, which is a flowchart of a process 30 for detecting radio link failure according to a preferred embodiment and a second embodiment of the present invention. The process 30 is used to handle radio link failure in a communications device, such as the radio link failure handling program code 220 in the communications device 100 described above, in a wireless communications system, such as an LTE/SAE wireless communications system, and comprises the following steps:
Step 300: Start.
Step 302: Utilize at least two first timers in a first entity or at least two second timers in a second entity for radio link recovery or re-establishment to determine when to enter an idle mode or when to release a radio resource.
Step 304: End.

In the preferred embodiment, the first entity is a user equipment, and the second entity is a network service provider, such as an eNB. The UE enters an idle mode based on timer expiration or indicated information, whereas the eNB releases assigned radio resources to the UE. The two timers for two services at the UE can determine when to enter the idle mode with least delay. One of the two timers for services at the UE can be used to determine when to enter the idle mode, and the other can be used to determine when to release the radio resource.

For the packet switching domain in LTE, when radio connection is lost or radio link failure is detected, there are at least two timers which are used to determine when to enter LTE_IDLE (RRC_IDLE) mode or when to release radio resources, in both the UE and/or the eNB. For example, at least two timers for services at the UE can determine when to enter IDLE mode with least delay. In another case, one of at least two timers for services at UE can be used to determine when to enter IDLE mode and another (the other) can be used to be used to determine when to release the radio resource.

The values of the timers can be configured or reconfigured by a functional entity or a decision from a set of functional entities. The values of the timers for the UE can be obtained in system information blocks sent from the eNB, or in the control information from a higher layer in the UE. The system information block or blocks can be dedicated to the UE or a group of UEs, as there may be more than one UE sharing a specific service. Whether the suggestion originates from the UE or the network service provider is based on whether the service is a UE-initiated QoS service or a Network-initiated QoS service. Basically, the suggestion originates from the first entity if the service is a QoS service initiated by the first entity, and the suggestion originates from the network functional entity if the service is a QoS service initiated by the network functional entity.

The values of timers for services can also be suggested, after negotiation, by a functional entity in the user equipment or the network service provider. The values of the timers in the UE can be suggested by itself or by a network entity other than the eNB. For example, a network server (maintained by a service provider) may indicate to the eNB (maintained by a mobile network operator) the service requirement and proper timer value for a service in a packet switching domain. The functional entity can be the mobility management entity in aGW, or a scheduler and/or RB control entity and/or Mobility Management entity in the eNB. The set of functional entities are included in NAS in the aGW or control plane in the eNB.

The values of the timers in the eNB are longer than or equal to the values of the timers in the user equipment. The values of the timers can be predefined and stored in the entity or entities. The configured and/or reconfigured values of the timers are based on statistics and/or status of radio link or transmission, and/or service configuration, and/or network configuration, and/or system load. The reconfiguration procedure is a normal re-establishment, reconfiguration, or bearer setup procedure. The reconfiguration procedure can be also triggered by the received suggestion message.

Each timer is not restricted for a certain class, or classes, of services if it is not configured. Re-establishment of lost connections and/or a normal cell update procedure is allowed before corresponding timers expire or are pre-terminated. The cell update procedure is no longer used in LTE, but a random access procedure performs the same function at radio link failure recovery or radio link reestablishment as the cell update procedure. When one of the timers expires, all Radio Bearers associated with that timer are released.

Each timer of the timers can be applied to a same class of services, or different classes of services, depending on the configuration. In other words, for example, two timers can be used for the same category of services or two or more different categories of services. The UE enters an idle state, such as LTE_IDLE (RRC_IDLE), and/or indicates a cause for entering LTE_IDLE (RRC_IDLE) as RLF if all of the timers expire or if all Radio Bearers, which are associated with the timers used, are released or will be released. The first entity may transition from the idle state to an active state through cell reselection or an establishment procedure if the first entity decides to initiate a new service connection or re-enter a service connection which has just been disconnected. Though the service may be not running, the UE still needs to maintain the link. If the UE would like to initiate a new service, and/or re-enter a service which is recently disconnected, the UE can transit from LTE_IDLE (RRC_IDLE) to LTE_ACTIVE (RRC_CONNECTED) through cell reselection and/or a normal establishment procedure.

Please note that mention is made of the same class of services or different classes of services. Such classes can be unicast or multicast, real time or non real time, or other possible categories. However, p-t-m MBMS services are excluded. Radio link failure and recovery procedures are not applicable to the p-t-m MBMS services. The UE can receive p-t-m MBMS services in any state (including idle mode, where the UE does not need to enter the connected mode to receive the p-t-m MBMS services). Thus, the UE does not need to release all RBs and enter idle mode when timers for this type of service expire.

## Claims

1. A method of handling radio link failure in a packet switching domain of a wireless communications system after detecting the radio link failure comprising:
establishing wireless communication; and
utilizing at least two first timers in a first entity or at least two second timers in a second entity for radio link recovery or re-establishment to determine when to enter an idle mode or when to release a radio resource (302).

2. The method of claim 1, wherein values of the at least two first timers or the at least two second timers are configured or reconfigured by a functional entity or a decision from a set of functional entities.

3. The method of claim 1, wherein values of the at least two first timers of the first entity are obtained from at least one system information block sent by the second entity, or from control information from a higher layer of the first entity.

4. The method of claim 1, wherein values of the at least two first timers or at least two second timers are suggested by a functional entity in the first entity or a functional entity at network.

5. The method of claim 1, wherein re-establishment of lost connections is allowed before corresponding timers are pre-terminated or expire.

6. The method of claim 1 further comprising releasing all radio bearers associated with one of the timers when the timer expires.

7. The method of claim 2, wherein the functional entity is a mobility management entity in an advanced gateway, or a scheduler, a radio bearer control entity, or a mobility management entity in the second entity.

8. The method of claim 2, wherein the plurality of functional entities are included in a non-access stratum in an advanced gateway, or are included in a control plane in the second entity.

9. The method of claim 2, wherein the configured values of timers are based on statistics, status of radio link or transmission, service configuration, network configuration, or system load.

10. The method of claim 2, further comprising performing a reconfiguration procedure, wherein the reconfiguration procedure is a normal re-establishment, reconfiguration, or bearer setup procedure.

11. The method of claim 3, wherein the system information block is dedicated to the first entity or a group of first entities.

12. The method of claim 6, further comprising the first entity entering an idle state and indicating a cause for entering the idle state as RLF if a running timer expires or is pre-terminated, or if associated Radio Bearer(s) used are released or will be released.

13. The method of claim 12, further comprising the first entity transitioning from the idle state to an active state through cell reselection or an establishment procedure if the first entity decides to initiate a new service connection or re-enter a service connection which has just been disconnected.

14. A communications device (100) capable of detecting radio link failure for use in a wireless communications system, the communications device (100) comprising:
a control (106) circuit for realizing functions of the communications device (100);
a processor (108) installed in the control circuit (106), for executing a program code (112) to operate the control circuit (106); and
a memory (110) coupled to the processor (108) for storing the program code (112), the program code (112) comprising:
code for establishing wireless communication; and
code for utilizing at least two first timers-in a first entity or at least two second timers in a second entity for radio link recovery or re-establishment to determine when to enter an idle mode or when to release a radio resource (302).

15. The communications device (100) of claim 14, wherein values of the at least two first timers or the at least two second timers are configured or reconfigured by a functional entity or a decision from a set of functional entities.

16. The communications device (100) of claim 14, wherein values of the at least two first timers of the first entity are obtained from at least one system information block sent by the second entity, or from control information from a higher layer of the first entity.

17. The communications device (100) of claim 14, wherein values of the at least two first timers or at least two second timers are suggested by a functional entity in the first entity or a functional entity at network.

18. The communications device (100) of claim 14, wherein re-establishment of lost connections is allowed before corresponding timers are pre-terminated or expire.

19. The communications device (100) of claim 14 further comprising releasing all radio bearers associated with one of the timers when the timer expires.

20. The communications device (100) of claim 15, wherein the functional entity is a mobility management entity in an advanced gateway, or a scheduler, a radio bearer control entity, or a mobility management entity in the second entity.

21. The communications device (100) of claim 15, wherein the plurality of functional entities are included in a non-access stratum in an advanced gateway, or are included in a control plane in the second entity.

22. The communications device (100) of claim 15, wherein the configured values of timers are based on statistics, status of radio link or transmission, service configuration, network configuration, or system load.
